# FASCICULE DE BREVET EUROPEEN

(11) **EP 0 647 005 B1**
(45) Date de publication et mention de la délivrance du brevet: **05.11.1997**
(21) Numéro de dépôt: 94402162.5
(22) Date de dépôt: 28.09.1994
(51) Int. Cl.: H02H 3/04, H01R 13/66, H01R 13/717, H01T 4/06

(54) **Module de protection parallèle et série**
Parallel- und Serienschutzmodul
Parallel and series protection module

(30) Priorité: 30.09.1993 FR 9311678
(43) Date de publication de la demande: 05.04.1995
(73) Titulaire: ALCATEL ALSTHOM COMPAGNIE GENERALE D'ELECTRICITE, 75008 Paris (FR)
(72) Inventeur: Rogowski, Laurent, F-08000 Charleville-Mézières (FR); Audeval, Fabrice, F-08000 Charleville-Mézières (FR)
(74) Mandataire: Buffière, Michelle

(56) Documents cités:
- EP-A- 0 327 359
- FR-A- 2 597 276
- US-A- 4 862 314
- US-A- 4 907 120
- US-A- 4 913 663

## Description

La présente invention se rapporte aux modules de protection parallèle et série, destinés à assurer la protection des lignes à faibles courants et des équipements reliés à ces lignes, contre les surtensions et les surintensités sur les lignes.

Ces modules de protection sont en particulier utilisés dans les têtes de câbles téléphoniques. Ils sont du type enfichable dans des réglettes de connexion raccordant des différentes lignes téléphoniques d'un câble à des jarretières de raccordement et de brassage. Chaque module de protection est affecté à l'une quelconque des lignes. Il se présente sous la forme d'un boîtier ou tiroir d'enfichage, reçu dans l'un des logements prévus à cet effet dans les réglettes de connexion, pour se raccorder en deux points d'entrée et deux points de sortie à deux paires de contacts de la réglette, qui sont accessibles dans ce logement et sont par ailleurs raccordées à l'une des lignes et à une paire de conducteurs de sortie ou jarretière, respectivement.

Un tel module de protection comporte de manière connue un parafoudre tripolaire ou deux parafondres bipolaires dans le boîtier, constituant une protection parallèle contre les surtensions. Ce ou ces parafoudres assurent l'écoulement temporaire à la masse du courant sur la ligne, pendant la présence de surtensions transitoires ne donnant bien qu'à un faible échauffement du ou des parafoudres. Il comporte également une pastille fusible sensible à une élévation importante de température du ou de chaque parafoudre, qui permet sa mise définitive en court-circuit quand elle est fondue pour l'écoulement permanent à la masse du courant sur la ligne.

Ce ou ces parafoudres ont une tension d'amorçage relativement élevée. Ils n'écoulent à la masse les intensités importantes du courant résultant d'une surtension que lorsqu'ils sont déclenchés, c'est-à-dire lorsque la surtension est de valeur supérieure à cette tension d'amorçage. Il est donc connu d'associer d'autres composants supplémentaires au parafoudre tripolaire ou aux deux parafoudres bipolaires, assurant un découplage entre chaque point d'entrée raccordé au parafoudre et chaque point de sortie, pour réaliser une protection supplémentaire, notamment série.

Ainsi les documents US-A-3934175, et FR-A-2600465 décrivent des circuits de protection comportant un ou deux parafoudres de protection parallèle ainsi qu'une inductance et/ou une résistance, qui sont branchées en série l'une avec l'autre et entre chaque point d'entrée raccordé au parafoudre et chaque point de sortie lui-même raccordé à une diode zener, cette diode zener étant par ailleurs à la masse et se déclenchant avant le ou les parafoudres.

Ainsi également, le document FR-A-2662042 décrit un circuit de protection comportant un parafoudre tripolaire (ou deux parafoudres bipolaires) de protection parallèle et deux résistances à coefficient de température positif de protection série, l'ensemble étant porté par une plaque de circuit imprimé, elle-même montée dans un boîtier, en laissant des pistes de raccordement ou points d'entrée et de sortie accessibles sur l'extérieur du boîtier.

Ces circuits à protection parallèle et protection série permettent une meilleure protection de chaque paire de conducteurs de sortie et des équipements qui leur sont raccordés, contre les surtensions et surintensités sur chaque ligne téléphonique ou ligne d'entrée. Une défaillance possible de l'un des composants ne permet plus alors d'obtenir la protection normalement attendue. Il s'avère en conséquence utile associer une signalisation au circuit de protection, pour détecter et signaler des anomalies de fonctionnement du circuit ou une défaillance de l'un des composants de protection parallèle et/ou série.

Le document US-A 4 862 314 décrit un module de protection se présentant sous forme d'un boîtier et comportant une diode électroluminescente pour la signalisation du maintien d'une surtension ou surintensité présente sur une ligne d'entrée et alors écoulée à la masse. Cette diode est d'une part reliée dans le boîtier en série avec un contact, ouvert en l'absence d'un tel défaut mais fermé dans les conditions ci-avant, qui est lui-même relié à la masse, et d'autre part alimentée par une tension extérieure. Ce contact en position fermée pour l'information de défaut sur la ligne d'entrée ferme le circuit d'alimentation de la diode alors allumée.

La présente invention a pour but d'intégrer totalement une signalisation de défaut avec son alimentation dans un module de protection parallèle et série, en évitant pour autant de surdimensionner le module de protection et de rendre complexe le circuit défini par l'ensemble de ses composants et cette signalisation intégrée.

Elle a pour objet un module de protection parallèle et série comportant dans un boîtier au moins un parafoudre de protection parallèle, connecté entre deux points dits d'entrée et au moins un point de masse accessibles sur ledit boîtier et ayant une tension d'amorçage définie, des composants de protection série, connectés entre les points d'entrée et deux autres points dits de sortie, également accessibles sur le boîtier, une pastille fusible de court-circuit associée à chaque parafoudre, et des moyens de signalisation extérieure d'une défaillance de protection d'une ligne de sortie connectée auxdits points de sortie contre des surtensions et surintensités sur une ligne d'entrée connectée auxdits points d'entrée, caractérisé en ce que lesdits moyens de signalisation sont constitués par deux lampes, choisies de tension d'allumage supérieure à la tension nominale de ladite ligne d'entrée reliées chacune d'une part directement à l'un desdits points d'entrée et d'autre part audit point de masse, dans ledit boîtier.

Ce module présente avantageusement en outre au moins l'une des caractéristiques additionnelles suivantes:
- Lesdites lampes de signalisation sont des mini-lampes néon.
- Lesdites lampes sont de tension d'allumage très peu supérieure à la tension nominale de la ligne d'entrée et ont une tension d'extinction sensiblement égale à la tension nominale de la ligne d'entrée.
- Lesdites mini-lampes néon sont reliées à travers une résistance série au point masse.
- Ledit boîtier, comportant un fond, deux parois latérales, une petite face avant pourvue d'une poignée de préhension, une petite face arrière et une face supérieure opposée au fond, est compartimenté transversalement par une cloison quasi-arrière, une cloison échancrée quasi-avant et au moins une cloison intermédiaire et reçoit chaque parafoudre entre ladite cloison quasi arrière et la cloison intermédiaire adjacente, lesdites lampes sur ladite cloison quasi-avant et de part et d'autre de ladite poignée à travers la face avant ouverte à leur effet, et les composants de protection série dans une partie dite intermédiaire du boîtier, chaque parafoudre étant relié à au moins l'un de deux contacts d'entrée retenus sur la partie arrière du fond et à au moins un contact de masse retenu sur la partie arrière de la face supérieure, lesdits composants de protection série étant reliés d'une part aux deux contacts d'entrée et d'autre part à deux contacts de sortie, eux-mêmes retenus sur la partie avant du fond, et lesdites lampes étant reliées chacune à l'un des contacts d'entrée et au contact de masse, dans la partie intermédiaire dudit boîtier.
- Lesdits composants de protection série sont deux éléments résistifs à coefficient de température positif ayant une forme cylindrique de faible hauteur et deux bornes frontales opposées, et sont maintenus entre deux cloisons intermédiaires du boîtier, chacun d'une part par appui de l'une de ses bornes contre une partie terminale de l'un desdits contacts d'entrée, replié contre l'une des cloisons intermédiaires, et d'autre part par pression d'une partie terminale arquée de l'un desdits contacts de sortie contre l'autre borne.

Les caractéristiques et avantages de la présente invention ressortiront de la description faite ci-après d'un exemple de réalisation illustré dans les dessins ci-annexés. Dans ces dessins:
- les figures 1 et 2 sont deux vues en perspective, depuis le dessus et le dessous, d'un module de protection, selon la présente invention,
- la figure 3 est une vue en coupe longitudinale du module de la figure 1,
- la figure 4 est un schéma du circuit électrique de ce module.

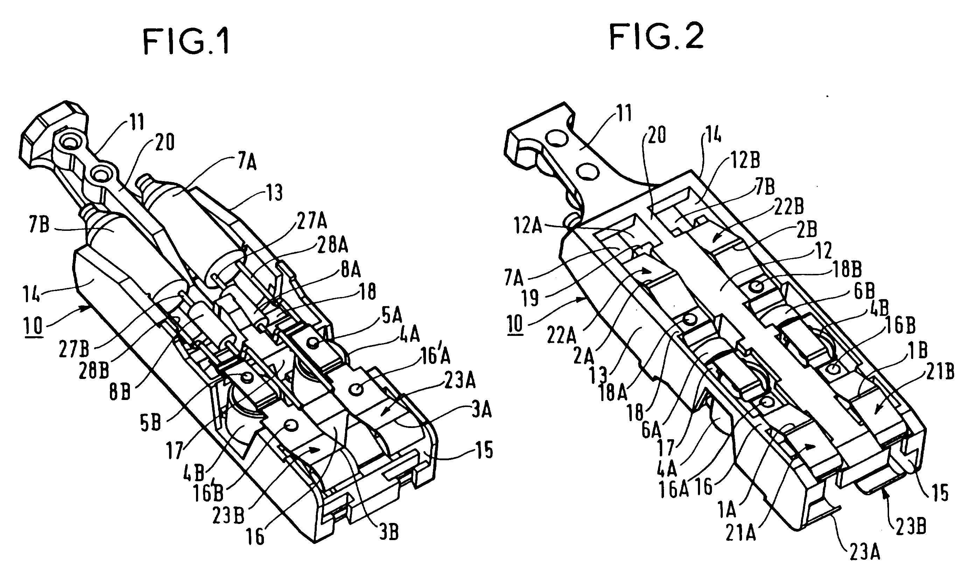

Ce module de protection représenté dans les figures 1 à 3 est du type enfichable dans un des différents logements prévus à cet effet dans une réglette de connexion connue et non représentée d'une tête de câble. Ainsi que bien connu en tant que tel également, il se raccorde à deux paires de contacts de la réglette, qui sont accessibles dans ce logement et sont par ailleurs raccordés pour les contacts de l'une des paires à l'une des lignes téléphoniques du câble et pour les contacts de l'autre paire à une paire de deux conducteurs de sortie ou jarretière. En place dans ce logement, il se raccorde également à un contact ou une paire de contacts de masse accessibles dans le logement et raccordés à une masse.

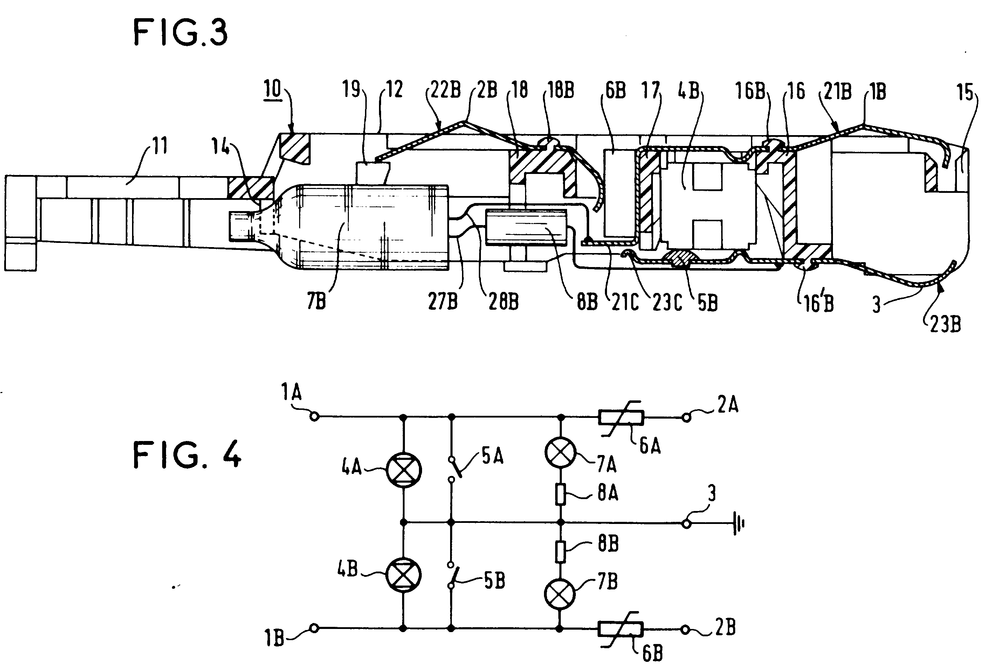

On a simplement repéré dans les figures 1 à 3 et dans la figure 4, les points dits d'entrée 1A et 1B de raccordement du module à la ligne téléphonique, les points dits de sortie 2A et 2B de raccordement à la jarretière et le ou les points 3 de raccordement à la masse, ces raccordements étant réalisés via les paires de contacts de la réglette de connexion et des paires de contacts du module.

En se référant aux différentes figures et plus particulièrement à la figure 4, on voit que ce module de protection comporte:
- deux parafoudres bipolaires 4A et 4B, dont l'une de leurs deux bornes est reliée à l'un des points d'entrée 1A et 1B selon le parafoudre considéré et l'autre borne est reliée au point de masse 3,
- deux pastilles fusibles 5A et 5B, chacune associée à l'un des parafoudres et permettant sa mise en court-circuit,
- deux résistances à coefficient de température positif 6A et 6B, chacune reliée en série entre l'un des points d'entrée 1A et 1B ou la borne correspondante de l'un des parafoudres et l'un des points de sortie 2A et 2B, et
- deux mini-lampes néon 7A et 7B, chacune reliée d'une part directement à l'un des points d'entrée 1A et 1B et d'autre part à travers une résistance série 8A ou 8B au point de masse 3 et permettant une signalisation des défaillances de fonctionnement.

Bien entendu le module peut comporter un seul parafoudre alors tripolaire, équivalent à ces deux parafoudres bipolaires et se substituant à ceux-ci.

L'ensemble de ces composants est monté dans un boîtier 10 en plastique, dans lequel les composants sont reliés les uns aux autres comme indiqué ci-avant par des contacts retenus sur le boîtier et précisés ultérieurement en regard des figures 1 à 3.

Ce boîtier est de faibles dimensions et de forme rectangulaire et relativement plate. Il est pourvu sur l'une de ses petites faces, dite avant, d'une poignée de préhension 11, très largement saillante sur cette face avant, selon l'axe longitudinal médian du boîtier. La face supérieure du boîtier est montrée ouverte, pour rendre visible les composants qui y sont montés. Elle est normalement presque totalement fermée par un couvercle non représenté, rapporté sur cette face supérieure et laissant accessibles ceux des points d'entrée, de sortie et de masse qui sont situés sur cette face.

Le boîtier 10 donne sa forme compacte au module de protection, à signalisation intégrée. Il assure la tenue des composants et rend l'ensemble résistant mécaniquement aux vibrations et aux chocs.

Ce boîtier 10 présente un fond 12 et deux parois latérales relativement longues 13. Il a sa petite face avant 14 entr'ouverte de part et d'autre de la poignée 11, pour laisser visibles les deux lampes 7A et 7B. Sa petite face opposée dite arrière 15 est également ouverte.

Ce boîtier est compartimenté ainsi que visible plus nettement dans la figure 3, de l'arrière à l'avant du boîtier par des cloisons transversales 16 à 19. Il est en outre divisé sur une partie de sa longueur ainsi que visible en particulier dans la figure 1, depuis sa face avant par une cloison axiale 20 partant de la poignée 11 et centrée sur celle-ci, pouvant être échancrée et aboutissant à la cloison transversale 17.

Les deux parafoudres bipolaires sont montés côte à côte entre les deux cloisons 16 et 17, et séparés par deux nervures non référencées en vis-à-vis sur ces deux cloisons, avec leur borne de masse pratiquement sur la face supérieure et leur autre borne accessible à travers le fond 12. Une paire de contacts 21A et 21B dits de ligne d'entrée et une paire de contacts 23A et 23B dits de masse sont raccordées aux bornes des parafoudres.

Les deux résistances à coefficient de température positif 6A et 6B sont montées entre les cloisons 17 et 18 et sont séparées par la cloison axiale 20. La paire de contacts de ligne 21A et 21B et une paire de contacts dits de ligne de sortie 22A et 22B sont raccordées aux bornes de ces deux résistances 6A et 6B et assurent leur maintien.

Ces contacts 21 à 23 sont des contacts plats et pliés.

Les contacts de ligne 21A et 21B s'étendent notamment sur la partie arrière du fond et les contacts de sortie 22A et 22B sur la partie avant du fond, le fond présentant à cet effet deux rainures ou fenêtres longitudinales 12A et 12B. Les contacts de masse 23A et 23B s'étendent sur la partie arrière de la face supérieure.

Les contacts 21A et 21B sont fixés par un plot en plastique de retenue 16A ou 16B sur le bout inférieur de la cloison 16, les contacts 22A et 22B par un plot analogue 18A ou 18B sur le bout inférieur de la cloison 18 et les contacts 23A et 23B par un autre plot analogue 16'A ou 16'B sur le bout supérieur de la cloison 16. Une fixation différente peut être adoptée, par exemple une pliure profonde sur chaque contact et une rainure profonde sur les cloisons.

Chaque contact de ligne 21A ou 21B s'étend jusqu'à la face arrière, sur laquelle il est retenu. Il présente une cambrure intermédiaire, entre cette cloison et la face arrière, qui est saillante sous le fond, constitue l'un des points d'entrée précités 1A et 1B et est ainsi désignée. De l'autre côté de la cloison 16, il est raccordé à la borne dite de ligne de l'un des parafoudres et passe sous le bout inférieur de la cloison suivante 17. Il est ensuite replié et s'étend sur presque toute la hauteur de cette cloison 17, en étant raccordé en pression à l'une des bornes de l'une des résistances 6A et 6B. Sa partie terminale 21C est repliée au-dessus du corps de la résistance 6A ou 6B, en restant légèrement en retrait sous la face supérieure du boîtier.

Chaque contact de sortie 22 s'étend depuis la cloison 18 vers la face avant 14, en présentant une cambrure intermédiaire saillante sous la fond, qui constitue l'un des points de sortie 2A et 2B et est ainsi désignée. Au delà de la cloison 18, sa partie terminale est cintrée et se raccorde en pression à l'arrière de cette cloison 18 sur l'autre borne de l'une des résistances 6A et 6B.

Les contacts de masse 23A et 23B s'étendent libres élastiquement depuis la cloison 16 jusqu'à la face arrière, en présentant une cambrure quasi terminale, qui est saillante sur la face supérieure du boîtier et constitue l'un des points de masse 3A et 3B. Chacun s'étend, de l'autre côté, sur la borne de masse de l'un des parafoudres, est soudé sur le bord de cette borne le plus proche de la cloison 16 mais est séparé du bord opposé de cette même borne par l'une des pastilles fusibles 5A et 5B, cette pastille étant retenue sur ce contact et étant interposée entre lui et ce bord de la borne de masse. Il passe ensuite légèrement au dessus de la cloison 17 échancrée à cet effet et présente une partie terminale 23C, s'étendant en regard et à faible distance de la partie terminale 21C, de l'un des contacts de ligne 21A et 21B. La partie terminale 23C reste distante de la partie terminale 21C tant que la pastille fusible est solide, mais vient en appui sur cette dernière dès que la pastille fusible fond.

Les deux lampes néon 7A et 7B sont maintenues sur la cloison 19 échancrée pour définir un berceau de retenue pour chacune d'elles et sont séparées par la cloison axiale 20. Elles ont leur extrémité d'éclairage qui est libre à travers la face avant, de part et d'autre de la poignée 11. Elles ont sur leur extrémité opposée, une première patte de raccordement 27A ou 27B, selon la lampe, qui est directement soudée à la partie terminale 21C du contact 21A ou 21B, et leur deuxième patte de raccordement 28A ou 28B qui est quant à elle soudée à l'une des pattes de liaison de l'une des résistances 8A et 8B, ainsi que rendu plus nettement visible dans la figure 3.

Les résistances 8A et 8B reposent sur le bord supérieur de la cloison 18. Leur deuxième patte de liaison est soudée à l'un des contacts de masse 23A et 23B, sur une partie intermédiaire de celui-ci, la partie terminale 23C conservant ainsi son élasticité.

Ces dispositions rendent le module de protection parallèle et série et à signalisation intégrée particulièrement compact et de résistance mécanique élevée lorsqu'il est soumis à des vibrations ou chocs. Le module est à nombre de composants réduit pour la protection de la paire de conducteurs de sortie et la signalisation de défaut sur la ligne téléphonique d'entrée ou de défaillance de l'un des parafoudres.

Cette signalisation réalisée par mini-lampes néon ne nécessite aucune source d'alimentation extérieure.

Dans ce module, les parafoudres 4A et 4B ont une tension d'amorçage de l'ordre de 230V. Les lampes 7A et 7B sont choisies pour présenter une tension d'allumage de l'ordre de 80 à 85V, c'est-à-dire sensiblement supérieure à la tension nominale des lignes téléphoniques d'entrée, et une tension d'extinction de l'ordre de 45 à 50V, c'est-à-dire sensiblement égale à cette tension nominale, typiquement de 48V. Elles sont à cet effet chacune en série avec l'une des résistances 8A et 8B choisies de l'ordre de 100 k0hms les reliant à la masse.

En fonctionnement, lors d'une surtension transitoire inférieure à la tension d'amorçage des parafoudres, le ou les parafoudres concernés sont sans action, la ou les résistances à coefficient de température positif réduisent substantiellement la surtension et la ou les lampes s'allument dès lors que la surtension d'entrée est supérieure à la tension d'allumage des lampes. Dans ces conditions, chaque lampe allumée indique la présence d'une perturbation d'entrée, bien que le ou les parafoudres n'aient pas lieu de s'amorcer. Cette lampe ne s'éteint que si la surtension disparait ou devient inférieure à la tension d'extinction des lampes.

Lorsque la surtension est supérieure à la tension d'amorçage des parafoudres et que le ou les parafoudres concernés sont défectueux et n'assurent pas leur fonction, la ou les lampes s'allument pareillement pour indiquer la perturbation présente et restent allumées tant que la surtension ne redescend pas en dessous de la tension d'extinction.

La ou les lampes allumées sont significatives d'une perturbation importante, pas nécessairement excessive mais cependant à surveiller. Une durée prolongée d'allumage est estimée anormale et susceptible de traduire une défaillance alors fortement plausible de l'un ou de plusieurs des composants, nécessitant alors une vérification du module estimé défaillant, ou traduit un contact accidentel sur la ligne téléphonique alors à déceler et corriger. Il va de soi que l'invention n'est pas limitée à l'exemple de réalisation illustré et décrit ci-avant. Ainsi le module de protection peut comporter un seul parafoudre tripolaire et/ou des composants de protection série autres que les résistances à coefficient de température positif et/ou une seule résistance associée au deux mini-lampes néon, ces deux lampes étant alors directement en série l'une avec l'autre entre les deux points d'entrée et la seule résistance associée étant raccordée entre leur point commun de connexion et le point de masse et étant retenue dans une échancrure de la cloison axiale du boîtier. Lorsque le module comporte un seul parafoudre tripolaire celui-ci est monté transversalement au boîtier, à l'emplacement précédemment occupé par les deux parafoudres bipolaires et éventuellement adapté, et est raccordé par deux contacts auxiliaires de ligne aux deux contacts précités de ligne et par un contact auxiliaire de masse aux deux contacts précités de masse ou à un seul contact de masse.

## Revendications

1. Module de protection parallèle et série comportant dans un boîtier au moins un parafoudre de protection parallèle, connecté entre deux points dits d'entrée (1A, 1B) et au moins un point de masse (3) accessibles sur ledit boîtier et ayant une tension d'amorçage définie, des composants de protection série, connectés entre les points d'entrée et deux autres points dits de sortie (2A, 2B), également accessibles sur le boîtier, une pastille fusible de court-circuit associée à chaque parafoudre, et des moyens de signalisation (7A, 7B) extérieure d'une défaillance de protection d'une ligne de sortie connectée auxdits points de sortie contre des surtensions et surintensités sur une ligne d'entrée connectée auxdits points d'entrée, caractérisé en ce que lesdits moyens de signalisation sont constitués par deux lampes (7A, 7B), choisies de tension d'allumage supérieure à la tension nominale de ladite ligne d'entrée reliées chacune d'une part directement à l'un desdits points d'entrée (1A, 1B) et d'autre part audit point de masse (3), dans ledit boîtier.

2. Module selon la revendication 1, caractérisé en ce que lesdites lampes (7A, 7B) sont de tension d'allumage choisie relativement peu supérieure à la tension nominale de la ligne d'entrée et relativement très inférieure à la tension d'amorçage de chaque parafoudre et ont une tension d'extinction sensiblement égale à ladite tension nominale de la ligne d'entrée.

3. Module selon l'une des revendications 1 et 2, caractérisé en ce que lesdites lampes de signalisation (7A, 7B) sont des mini-lampes néon.

4. Module selon la revendication 3, caractérisé en ce que lesdites mini-lampes néon sont reliées à travers une résistance série (8A, 8B) audit point masse.

5. Module selon l'une des revendications 1 à 4, dans lequel ledit boîtier forme un tiroir rectangulaire et plat d'enfichage, pourvu d'un fond, d'une face supérieure opposée, de deux parois latérales, deux petites faces arrière et avant et d'une poignée de préhension sur ladite face avant, caractérisé en ce que ledit boîtier (10) est compartimenté transversalement par une cloison quasi-arrière (16), une cloison quasi-avant (19) et au moins une cloison intermédiaire (17, 18) et reçoit chaque parafoudre (4A, 4B) entre ladite cloison quasi arrière (16) et la cloison intermédiaire adjacente (17), lesdites lampes sur ladite cloison quasi-avant (19), échancrée à cet effet, et de part et d'autre de ladite poignée dans la face avant (14) ouverte à leur effet, et les composants de protection série (6A, 6B) dans une partie dite intermédiaire du boîtier, chaque parafoudre étant relié à au moins l'un de deux contacts d'entrée (21A, 21B) retenus sur la partie arrière du fond et à au moins un contact de masse (23A, 23B) retenu sur la partie arrière de la face supérieure, lesdits composants de protection série étant reliés d'une part aux deux contacts d'entrée et d'autre part à deux contacts de sortie (22A, 22B), eux-mêmes retenus sur la partie avant du fond, et lesdites lampes étant couplées chacune à l'un des contacts d'entrée et au contact de masse, dans la partie intermédiaire dudit boîtier.

6. Module selon la revendication 5, dans lequel lesdits composants de protection série sont deux éléments résistifs ayant une forme cylindrique de faible hauteur équipée de deux bornes frontales opposées, caractérisé en ce que ledit boîtier (10) présente deux cloisons intermédiaires (17, 18) entre lesquelles chacun desdits éléments résistifs (6A, 6B) est maintenu d'une part par appui de l'une de ses bornes contre une partie terminale de l'un desdits contacts d'entrée (21A, 21B), replié contre l'une des cloisons intermédiaires (17), et d'autre part par pression d'une partie terminale arquée de l'un desdits contacts de sortie (22A, 22B) contre l'autre borne.

## Patentansprüche

1. Parallel- und Serienschutzmodul mit einem Gehäuse, das mindestens einen Parallelschutz-Überspannungsableiter mit definierter Zündspannung, der zwischen zwei Eingangspunkte (1A, lB) und mindestens einen Massepunkt (3) angeschlossen ist, die an dem Gehäuse zugänglich sind, Serienschutz-Bauelemente, die zwischen die Eingangspunkte und zwei ebenfalls am Gehäuse zugängliche Ausgangspunkte geschaltet sind, eine Kurzschluß-Schmelzpastille, die jedem Überspannungsableiter zugeordnet ist, sowie Signalisierungsmittel (7A, 7B) zur Meldung eines Ausfalls des Schutzes einer an die Ausgangspunkte angeschlossenen Ausgangsleitung gegen Überspannungen und Überströme auf einer Eingangsleitung enthält, die an die Eingangspunkte angeschlossen ist, dadurch gekennzeichnet, daß die Signalisierungsmittel aus zwei Lampen (7A, 7B) bestehen, deren Zündspannung größer als die Nennspannung der Eingangsleitung gewählt ist und die je einerseits unmittelbar an einen der Eingangspunkte (1A, lB) und andererseits an den Massepunkt (3) im Gehäuse angeschlossen sind.

2. Modul nach Anspruch 1, dadurch gekennzeichnet, daß die Zündspannung der Lampen (7A, 7B) relativ knapp oberhalb der Nennspannung der Eingangsleitung und relativ deutlich unterhalb der Zündspannung jedes der Überspannungsableiter gewählt ist, während ihre Löschspannung im wesentlichen gleich der Nennspannung der Eingangsleitung gewählt ist.

3. Modul nach einem der Ansprüche 1 und 2, dadurch gekennzeichnet, daß die Signalisierungslampen (7A, 7B) Mini-Neonlampen sind.

4. Modul nach Anspruch 3, dadurch gekennzeichnet, daß die Mini-Neonlampen über einen Serienwiderstand (8A, 8B) an den Massepunkt angeschlossen sind.

5. Modul nach einem der Ansprüche 1 bis 4, bei dem das Gehäuse einen rechtwinkligen und flachen Steckeinschub bildet, der einen Boden, eine diesem gegenüberliegende Oberseite, zwei Seitenwände, eine kleine Rückseite und eine kleine Vorderseite und einen Griff an der Vorderseite besitzt, dadurch gekennzeichnet, daß das Gehäuse (10) in Querrichtung durch eine im hinteren Bereich liegende Trennwand (16), eine im vorderen Bereich liegende Trennwand (19) und mindestens eine dazwischenliegende Trennwand (17, 18) unterteilt ist, daß jeder Überspannungsableiter (4A, 4B) zwischen der Trennwand im hinteren Bereich (16) und der Zwischentrennwand (17), die Lampen auf der Trennwand im vorderen Bereich (19), die zu diesem Zweck ausgeschnitten ist, und zu beiden Seiten des Griffs an der zu diesem Zweck offenen Vorderseite, und die Serienschutz-Bauelemente (6A, 6B) in einem Zwischenbereich des Gehäuses angeordnet sind, wobei jeder Überspannungsableiter an mindestens einen der beiden Eingangskontakte (21A, 21B), die am hinteren Bereich des Bodens gehalten werden, und an mindestens einen Massekontakt (23A, 23B) angeschlossen ist, der am hinteren Bereich der Oberseite gehalten wird, und wobei die Serienschutz-Bauelemente einerseits mit den beiden Eingangskontakten und andererseits mit zwei Ausgangskontakten (22A, 22B) verbunden sind, die ihrerseits am vorderen Bereich des Bodens gehalten werden, während die Lampen je an einen der Eingangskontakte und den Massekontakt im Zwischenbereich des Gehäuses gekoppelt sind.

6. Modul nach Anspruch 5, in dem die Serienschutz-Bauelemente zwei Widerstandselemente sind, die zylindrisch geformt sind und eine geringe Höhe besitzen sowie einander gegenüberliegende stirnseitige Klemmen aufweisen, dadurch gekennzeichnet, daß das Gehäuse (10) zwei Zwischentrennwände (17, 18) enthält, zwischen denen jedes der Widerstandselemente (6A, 6B) einerseits durch Druck einer ihrer Klemmen gegen einen Endbereich eines der Eingangskontakte (21A, 21B), der um eine der Zwischentrennwände (17) gefaltet ist, und andererseits durch Druck eines gewölbten Endbereichs eines der Ausgangskontakte (22A, 22B) gegen die andere Klemme gehalten wird.

## Claims

1. Parallel and series protection module including in a casing at least one parallel protection surge arrester connected between two input terminals (1A, 1B) and at least one earth terminal (3) accessible on said casing and having a defined tripping voltage, series protection components connected between the input terminals and two output terminals (2A, 2B) also accessible on the casing and a short-circuit fusible pad associated with each surge arrester and means (7A, 7B) for signalling externally a malfunction of protection of an output line connected to said output terminals against voltage surges and current surges on an input line connected to said input terminals, characterised in that said signalling means comprise two lamps (7A, 7B) having a turn-on voltage greater than the nominal voltage of said input line, each connected directly to one of said input terminals (1A, 1B) and to said earth terminal (3), in said casing.

2. Module according to claim 1 characterised in that said lamps (7A, 7B) have a turn-on voltage slightly greater than the nominal voltage of the input line and very much lower than the tripping voltage of each surge arrester and have a turn-off voltage substantially equal to said nominal voltage of the input line.

3. Module according to claim 1 or claim 2 characterised in that said signalling lamps (7A, 7B) are miniature neon lamps.

4. Module according to claim 3 characterised in that said miniature neon lamps are connected to said earth terminal through a series resistor (8A, 8B).

5. Module according to any one of claims 1 to 4 wherein said casing forms a flat rectangular plug-in module having a bottom, a top facing the bottom, two side walls, front and rear smaller sides and a handle on said front, characterised in that said casing (10) is compartmented transversely by a partition (16) very near the back, a partition (19) very near the front and at least one intermediate partition (17, 18) and receives each surge arrester (4A, 4B) between said partition (16) very near the back and the adjacent intermediate partition (17), said lamps on said partition (19) very near the front, which is notched for this purpose, and on opposite sides of said handle in the front (14) open for this purpose, and the series protection components (6A, 6B) in an intermediate part of the casing, each surge arrester being connected to at least one of two input contacts (21A, 21B) secured to the rear part of the bottom and to at least one earth contact (23A, 23B) secured to the rear part of the top, said series protection components being connected to the two input contacts and to two output contacts (22A, 22B) secured to the front part of the bottom, said lamps being each connected to one of the input contacts and to the earth contact in the intermediate part of the casing.

6. Module according to claim 5 wherein said series protection components are two resistive devices having a cylindrical shape and a small height equipped with two opposed front terminals, characterised in that said casing (10) has two intermediate partitions (17, 18) between which each of said resistive devices (6A, 6B) is retained by virtue of one of its terminals bearing against a terminal part of one of said input contacts (21A, 21B), which is bent against one of the intermediate partitions (17), and an arcuate terminal part of one of said output contacts (22A, 22B) pressing against the other terminal.
